# EUROPÄISCHE PATENTSCHRIFT

(11) **EP 1 499 877 B1**
(45) Veröffentlichungstag und Bekanntmachung des Hinweises auf die Patenterteilung: **15.04.2009**
(21) Anmeldenummer: 03732285.6
(22) Anmeldetag: 22.04.2003
(51) Int. Cl.: G01N 21/85

(54) **MESSANORDNUNG FÜR SPEKTROSKOPISCHE MESSUNGEN**
MEASURING DEVICE, PARTICULARLY FOR CONDUCTING SPECTROSCOPIC MEASUREMENTS
DISPOSITIF DE MESURE DESTINE NOTAMMENT A DES MESURES SPECTROSCOPIQUES

(30) Priorität: 22.04.2002 DE 10217838; 25.04.2002 DE 10218485
(43) Veröffentlichungstag der Anmeldung: 26.01.2005
(73) Patentinhaber: Bruins, Hans Joachim, 81247 München (DE)
(72) Erfinder: Bruins, Hans Joachim, 81247 München (DE)
(74) Vertreter: Hertz, Oliver
(86) Internationale Anmeldenummer: PCT/EP2003/004148
(87) Internationale Veröffentlichungsnummer: WO 2003/089912

(56) Entgegenhaltungen:
- WO-A-00/25110
- US-A- 4 692 620
- US-A- 5 694 221
- US-B1- 6 281 501

## Beschreibung

Die Erfindung betrifft eine Messanordnung, insbesondere für optisch-spektroskopische Messungen an partikelförmigen oder flüssigen Proben, mit den Merkmalen gemäß dem Oberbegriff von Anspruch 1. Die Erfindung betrifft ferner ein Messverfahren zur optischen Spektroskopie an partikelförmigen oder flüssigen Proben.

Aus der Lebensmitteltechnik ist bekannt, partikelförmige Proben (z. B. Getreide, Samen oder dgl.) optisch-spektroskopischen Messungen zu unterziehen, um Aussagen über bestimmte Probeneigenschaften, wie z. B. die chemische Zusammensetzung, den Wassergehalt, die Oberflächenhärte oder dgl. zu ermitteln.

Es erfolgen bspw. Reflektions- oder Transmissionsmessungen mit Wellenlängen im sichtbaren oder infraroten Spektralbereich. Herkömmliche Messanordnungen zur Spektroskopie an Getreide umfassen eine Messküvette zur Aufnahme von Getreidekörnern und ein Spektrometer, das bspw. für hochempfindliche Transmissionsmessungen eingerichtet ist. Die Küvette wird von einer Seite bestrahlt. Auf der entgegengesetzten Seite wird das durchdringende Licht, das durch Oberflächenreflektionen die Küvette passieren kann, detektiert. Im Unterschied zur klassischen Spektroskopie an Flüssigkeiten sind die Messergebnisse bei der Spektroskopie an partikelförmigen Proben empfindlich von der Anordnung der Partikel in der Küvette abhängig. Je nach den Partikeleigenschaften, wie z. B. Volumen, Oberflächenstrukturen und dgl. können in der Küvette verschiedene Packungsdichten auftreten. Damit wird die Genauigkeit und Reproduzierbarkeit der Messergebnisse eingeschränkt.

Zur Überwindung des genannten Problems wurde in der Vergangenheit vorgeschlagen, an einer Messküvette mehrere Messungen durchzuführen und die Messergebnisse einer statistischen Auswertung zu unterziehen. Aus der Praxis ist bspw. bekannt, die Messküvetten auf Drehtellern anzuordnen, die an sich als Probenhalterungen für Messungen an Fleisch, Joghurt oder dgl. entwickelt wurden. Ein Drehteller umfasst eine flache Schale, in die eine Getreideprobe geschüttet wird. Zur spektroskopischen Messung werden verschiedene Teilbereiche der horizontal ausgerichteten Schale in den Strahlengang des Spektrometers bewegt. Dies erfolgt durch eine Drehung der Schale um eine vertikal ausgerichtete Drehachse. Durch die Mehrfachmessung an verschiedenen Orten einer Partikelschicht konnte die Reproduzierbarkeit der Messergebnisse zwar verbessert werden. Dennoch ist mit dem horizontal verstellbaren Drehteller aus den folgenden Gründen eine Verfälschung der Messergebnisse gefunden worden.

Erstens besitzt die Schicht in der Schale keine gleichförmige Dicke und Dichte. Es kommt zur Häufchenbildung, durch die einerseits der Abstand zur Beleuchtungsoptik oder zum Detektor und andererseits die Schichtdicke von Position zu Position variiert. Des Weiteren kommt es beim Einfüllen von Partikeln zu bestimmten Schüttprofilen. Je nach den Partikeleigenschaften liegen die kleineren oder die größeren Partikel in der Schale oben. Dies führt zu einer Entmischung und damit zu einer Selektion der zur Messung beitragenden Partikel. Schließlich ist die verfügbare Probenmenge häufig zu klein, um eine schalenförmige Küvette mit einer ausreichenden Schichtdicke zu füllen. Eine Verkleinerung der Küvette ist jedoch wegen der Dimensionen des optischen Messstrahls und der einzelnen Partikel begrenzt.

Wegen der geringen Genauigkeit und Reproduzierbarkeit der Messergebnisse besitzen spektroskopische Messungen an Getreide bisher einen geringen Wert. Sie sind bspw. für eine grobe Klassifizierung einer Getreidequalität geeignet, nicht jedoch für eine differenzierte Bewertung bspw. von Sorten oder eine Detektion von Verunreinigungen oder Fusarien. Es besteht ein besonderes Interesse, selbst kleinste Verunreinigungen oder Pilze mit hoher Zuverlässigkeit festzustellen. So ist bei einem Fusarienbefall schon ein Anteil von einem Korn, das auf seiner Oberfläche Mikrotoxine trägt, unter 200 Körnern ein Befund, der eine Verwendung des Getreides in der Brauerei ausschließt. Unter einer Vielzahl von Körnern muss das ggf. befallene Korn gefunden werden. Dies setzt insbesondere eine Positionierung des Korns in der optischen Messstrecke derart voraus, dass Mikrotoxine spektroskopisch erfasst werden können.

Die genannten Probleme treten nicht nur bei der Untersuchung von Getreide oder anderen landwirtschaftlichen Produkten, sondern auch allgemein bei der Charakterisierung partikelförmiger, frei rieselfähiger, in einem flüssigen Medium suspendierter oder flüssigen Proben, insbesondere von Werkstoffen, wie z. B. Kunststoffgranulat, Baustoffen oder dgl. auf.

In US 5 694 221 wird ein Verfahren zur optischen Untersuchung einer Partikelprobe beschrieben. Die Partikelprobe ist in einer Flasche angeordnet, die mit einer Neigung gegenüber der Vertikalen drehbar im Strahlengang einer Beleuchtungseinrichtung angeordnet ist. In WO 00/25110 ist ein Messgerät zur spektroskopischen Untersuchung von Getreidekörnern beschrieben. Die Getreidekörner liegen in einer horizontal ausgerichteten Schale, die auf einem Drehtisch angeordnet ist.

Die Aufgabe der Erfindung ist es, eine verbesserte Messanordnung, insbesondere zur spektroskopischen Messung an partikelförmigen oder flüssigen Proben, bereitzustellen, mit der die Nachteile herkömmlicher Messanordnungen überwunden werden und die sich insbesondere durch eine erhöhte Sensitivität, Genauigkeit und Reproduzierbarkeit auszeichnet. Die erfindungsgemäße Messanordnung soll ferner einen erweiterten Anwendungsbereich besitzen und für die Messung an verschiedenartigen partikelförmigen oder flüssigen Proben geeignet sein. Die Aufgabe der Erfindung ist es auch, ein Verfahren zur spektroskopischen Messung an partikelförmigen Proben oder flüssigen bereitzustellen, mit dem die Nachteile der herkömmlichen Verfahren überwunden werden. Das verbesserte Verfahren soll insbesondere eine erhöhte Sensitivität, Genauigkeit und Reproduzierbarkeit der Messwerterfassung ermöglichen und mit den an sich bekannten spektroskopischen Messprinzipien kompatibel sein.

Diese Aufgaben werden durch eine Messanordnung, ein Messgerät und ein Verfahren mit den Merkmalen gemäß den nebengeordneten Patentansprüchen gelöst. Vorteilhafte Ausführungsformen und Anwendungen der Erfindung ergeben sich aus den abhängigen Ansprüchen.

Die Erfindung basiert insbesondere darauf, eine Messanordnung mit einer Messküvette zur Aufnahme einer partikelförmigen oder flüssigen Probe und einer Drehhalterung bereitzustellen, mit der die Messküvette um eine vorbestimmte Drehachse drehbar ist, wobei die Ausrichtung der Drehachse von der Vertikalrichtung (Richtung der Gravitation) abweicht. Im Gegensatz zur herkömmlichen Technik mit horizontalen Drehtellern, bei der alle Probenteile im gegenseitigen Kräftegleichgewicht und daher relativ zueinander unbeweglich sind, wird durch die erfindungsgemäße Verkippung der Drehachse aus der Vertikalrichtung mit jeder Verdrehung der Messküvette das Kräftegleichgewicht gestört. Durch jede Verdrehung der Messküvette wird das Gleichgewicht zwischen den Normalkräften gegenüber den umliegenden Partikeln (oder einer umgebenden Flüssigkeit) und der Gravitation für jede Teilprobe geändert. Durch die Drehung der Messküvette in verschiedene Messpositionen kommt es laufend zur Vermischung der Probe. Vorteilhafterweise werden damit inhomogene Schüttprofile, selektive Partikelbestrahlungen, variierende Schüttdichten und dgl. vermieden oder zuverlässig durch statistische Nachbearbeitung kompensiert. Bei flüssigen Proben kommt es ebenfalls zur Vermischung, Probenhomogenisierung und/oder Vergrößerung der effektiven Messfläche.

Vorteilhafterweise ist die Messanordnung für verschiedene, an sich bekannte spektroskopische Messverfahren, insbesondere für Transmissions- oder Reflektionsmessungen geeignet.

Gemäß einer bevorzugten Ausführungsform der Erfindung ist die Drehachse der Messküvette horizontal, das heißt senkrecht zur Vertikalen ausgerichtet. Bei horizontaler Ausrichtung ist die Durchmischung der Probe bei Verstellung der Messküvette besonders stark. Des Weiteren ergeben sich Vorteile im Bezug auf die Justierung eines zugehörigen Spektrometers.

Die Messküvette ist vorzugsweise mit einer Kopplungseinrichtung ausgestattet, die mit einer Antriebseinrichtung der Drehhalterung zusammenwirkt. Damit wird bei Bereitstellung eines elektrischen Antriebs der Messküvette der Aufbau der Messanordnung und insbesondere das Einsetzen der Messküvette in die Drehhalterung vereinfacht. Die Kopplungseinrichtung umfasst bspw. eine sich zumindest teilweise über einen Küvettenrand erstreckende Kopplungsfläche und/oder eine Nut für einen Riemenantrieb. Besondere Vorteile bei der Handhabung der Messanordnung ergeben sich, wenn die Kopplungsfläche eine Reibfläche ist und die Drehhalterung als Antriebseinrichtung ein Reibrad aufweist.

Gemäß der Erfindung wird die Messküvette durch einen Aufbau aus zwei Schalen gebildet, die vorzugsweise durch einen Ringrahmen zusammengehalten werden. Jeweils eine der Schalen kann, wie es von herkömmlichen Messanordnungen bekannt ist, mit einer Probe beschickt und mit der jeweils zweiten Schale verschlossen werden. Mit dem Ringrahmen, der vorzugsweise auf seiner Außenseite die Kopplungsfläche oder Nut trägt, wird der Verbund dicht verschlossen. Vorteilhaft ist es, wenn die beiden Schalen verschiedene Volumen besitzen. Durch vollständige Befüllung der größeren Schale kann sichergestellt werden, dass auch im verkippten Zustand mehr als die Hälfte des Küvettenvolumens gefüllt ist. Gemäß einer abgewandelten Gestaltung kann die Messküvette eine seitliche Öffnung aufweisen, wodurch vorteilhafterweise die Probenbeschickung und -entnahme erleichtert wird.

Die Mischwirkung der verkippt drehbar gehalterten Messküvette wird vorteilhafterweise erhöht, falls im Inneren der Messküvette mechanische Mischelemente angebracht sind, die für eine zusätzliche Umverteilung der Probe bei Verdrehung der Messküvette sorgen.

Es wird ferner eine Drehhalterung für eine Messküvette beschrieben. Die Drehhalterung bildet einen Träger, mit dem eine Messküvette um eine Drehachse drehbar gelagert ist, die von der Vertikalrichtung abweicht.

Ein weiterer Gegenstand der Erfindung ist ein Messgerät, das mit der erfindungsgemäßen Messanordnung und einem Spektrometer ausgestattet ist. Von besonderem Vorteil ist es, dass die Messküvette ohne besondere bauliche Maßnahmen mit der Drehhalterung in an sich bekannten Spektrometeranordnungen positioniert werden kann. Hierzu ist ggf. eine Stelleinheit vorgesehen, mit der die Messküvette von einer Ladeposition, in der die Messküvette in die Drehhalterung einsetzbar ist, in eine Kalibrierposition und in eine Messposition verfahrbar ist, in denen eine Kalibrierung und die eigentliche spektroskopische Messung erfolgen.

Ein weiterer Gegenstand der Erfindung ist ein Verfahren zur spektroskopischen Messung an partikelförmigen oder flüssigen Proben, bei dem eine Probe in der erfindungsgemäß verwendaten Messküvette angeordnet und wiederholt eine Vielzahl spektroskopischer Messungen durchgeführt werden, wobei zwischen jeweils zwei Messungen die Messküvette um eine Drehachse gedreht wird, die von der Vertikalrichtung abweicht. Bei jeder Verdrehung der Küvette wird die Probe umgerührt oder vermischt, so dass jede Messung an einem anderen Probengemenge erfolgt. Nach jeder Verdrehung der Messküvette besitzen die Teile der Probe im Strahlengang der Anordnung zur spektroskopischen Messung eine veränderte geometrische Verteilung. Die relativen Positionen der Partikel oder der Teile einer flüssigen Probe werden durch jede Verdrehung verändert. Dies ermöglicht vorteilhafterweise eine Verbesserung der statistischen Auswertung der Messergebnisse.

Die Erfindung besitzt die folgenden weiteren Vorteile. Erstens besitzt die Probe in der Messküvette eine definierte Schichtdicke. In allen Messpositionen ist die Geometrie der Messküvette relativ zum Spektrometer konstant, so dass die Reproduzierbarkeit weiter verbessert wird. Die Schichtdicke ist, insbesondere beim unten beschriebenen Schalenaufbau der Messküvette, je nach den Probeneigenschaften und Messanforderungen, einstellbar. Die Erfindung ermöglicht eine statistische Auswertung von Messergebnissen auch bei kleinen Probenmengen. Durch wiederholtes Drehen der Messküvette mit partikelförmigen Proben können selbst bei geringen Partikelzahlen die verschiedensten Schüttungen eingestellt werden, die statistisch unabhängige Messergebnisse liefern.

Ein weiterer, unerwarteter Vorteil ergibt sich bei partikelförmigen Proben aus der Probenschüttung in der Küvette. Es wurde festgestellt, dass in der geneigt eingestellten Küvette durch die Drehung eine engere Schüttung ermöglicht wird, als dies bei herkömmlich gefüllten, horizontalen Schalen der Fall ist. Es werden weniger Hohlräume gebildet. Die Wahrscheinlichkeit eines direkten Lichtdurchfalls durch die Messküvette sinkt. Dies ermöglicht die Einstellung geringerer Schichtdicken.

Die Erfindung besitzt einen weiten Anwendungsbereich bei verschiedenen Probenarten, wie z. B. landwirtschaftlichen Produkten (Getreide, Getreideprodukte, Gemüse, Erbsen, Soja, Kaffeebohnen, Samen, Gewürze, Raps und dgl.), Partikelmaterialien mit technischen Anwendungen (z. B. Kunststoffgranulat, Baumaterial, Pigmente) und dgl. und bei verschiedenen Messaufgaben, wie z. B. bei der Detektion von chemischen oder physikalischen Parametern der Partikel im freien geschütteten Zustand oder suspendiert in einem flüssigen Medium oder - bei landwirtschaftlichen Produkten - beim Nachweis von Sorten, Qualitätsparametern, Verunreinigungen, Pilzbefall, Genmanipulationen oder dgl..

Weitere Einzelheiten und Vorteile der Erfindung werden aus der folgenden Beschreibung der beigefügten Zeichnungen ersichtlich. Es zeigen:
- Fig. 1:: eine schematische Illustration einer ersten Ausführungsform einer erfindungsgemäßen Messanordnung,
- Fig. 2:: eine schematische Illustration einer weiteren Ausführungsform einer erfindungsgemäßen Messanordnung,
- Fig. 3:: Illustrationen der Funktion einer Stelleinheit zur Handhabung einer erfindungsgemäßen Messküvette,
- Fig. 4:: eine schematische Schnittansicht einer bevorzugten Ausführungsform einer erfindungsgemäßen Messküvette, und
- Fig. 5:: eine Seitenansicht einer weiteren Ausführungsform einer erfindungsgemäßen Messküvette.

Die Erfindung wird im Folgenden beispielhaft unter Bezug auf eine Messanordnung zur spektroskopischen Analyse an Getreideproben beschrieben. Die Umsetzung der Erfindung ist jedoch nicht auf die illustrierte, an die Getreideanalyse angepasste Geometrie der Messküvette, Gestaltung der Drehhalterung, Anordnung des Spektrometers oder dgl. beschränkt.

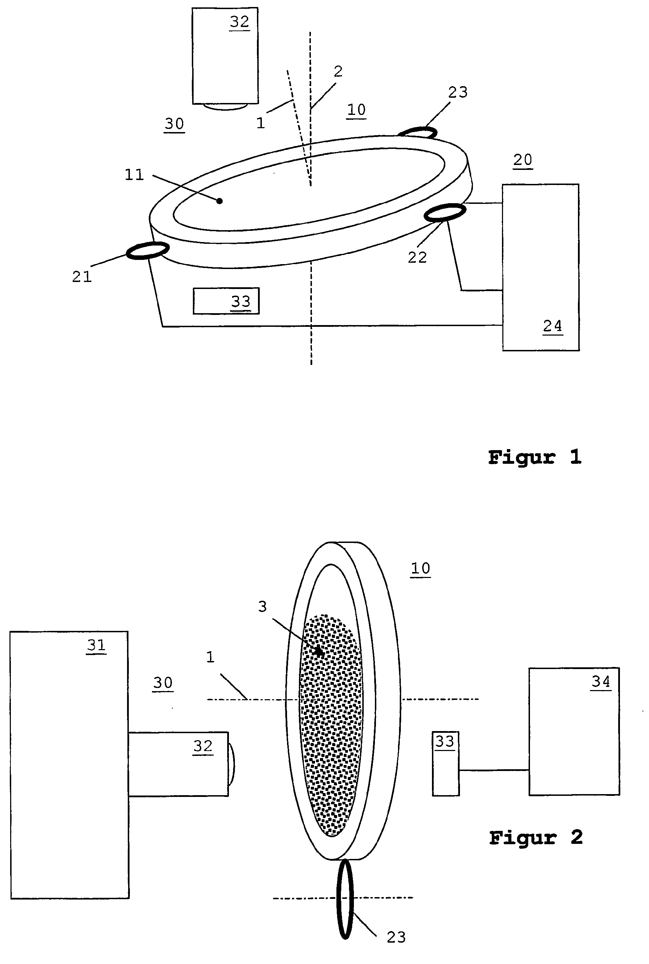

Fig. 1 zeigt als Teile einer erfindungsgemäßen Messanordnung eine Messküvette 10 und eine Drehhalterung 20. Die Messküvette 10, die in weiteren Einzelheiten unten beschrieben wird, bildet allgemein einen Behälter für die Probe (nicht dargestellt). Die Messküvette 10 besitzt mindestens ein Fenster 11, das bspw. durch eine transparente, ebene Seitenwand gebildet wird. Die Bereitstellung eines Fensters 11 ist für Reflektionsmessungen ausreichend. Für Transmissionsmessungen sind zwei Fenster vorgesehen, die vorzugsweise durch zwei transparente, parallele Seitenwände der Messküvette 10 gebildet werden.

Die Drehhalterung 20 umfasst allgemein einen oder mehrere Träger 21-23, mit denen die Messküvette 10 drehbar gehaltert wird. Die Träger 21-23 sind so gebildet, dass die Drehbarkeit der Messküvette 10 (insbesondere des einen Behälters, der durch die Messküvette 10 gebildet wird) um eine fest im Raum ausgerichtete Drehachse 1 gegeben ist. Erfindungsgemäß ist die Drehachse 1 gegenüber einer Bezugslinie 2 um einen vorbestimmten Winkel verkippt, wobei die Bezugslinie 2 parallel zur Vertikalen oder zur Richtung der Gravitation (oder Fallbeschleunigung) verläuft. Die Drehachse 1 ist also so ausgerichtet, dass auf jeden Partikel in der Messküvette 10 in jeder Rotationsposition eine andere Gesamtkraft aus Auflage- und Gravitationskräften wirkt. Bei jeder Drehung der Küvette erfolgt eine Bewegung aller oder nahezu aller Teilchen.

Der Winkel zwischen der Drehachse 1 und der vertikalen Bezugslinie 2 ist je nach Anwendung wählbar. Bei einem leicht beweglichen oder rieselfähigen Partikelgemenge genügen geringe Verkippungen aus der Vertikalen von z. B. mindestens 5°, um die erfindungsgemäße Durchmischung der Probe in der Messküvette bei jeder Drehung zu bewirken. Bevorzugt werden jedoch größere Winkel von mindestens 30° und besonders bevorzugt der rechte Winkel (90°) eingestellt (siehe Fig. 2).

Die Gestaltung der Träger 21-23 wird je nach der Geometrie und der Art der Kraftübertragung gewählt. Allgemein können als Träger die in der Konstruktionstechnik verfügbaren mechanischen Bauteile zur drehbaren Lagerung und zum Rotationsantrieb eines Gegenstandes verwendet werden. Beispielhaft sind als Träger drei Haltescheiben oder -räder gezeigt, die in einem ortsfesten System geneigt gelagert sind und bspw. auf der äußeren Oberfläche der Messküvette 10 oder in einer in dieser gebildeten Nut laufen. Vorzugsweise ist mindestens einer der Träger als Antriebseinrichtung 23, z. B. als Reibrad oder Gummiwalze ausgebildet (siehe Fig. 2). Die Haltescheiben oder - räder können durch Kugellagerungen oder Stiftlagerungen ersetzt sein.

Einer oder mehrere der Träger 21-23 sind mit einer Steuereinrichtung 24 verbunden, mit der der Betrieb der Drehhalterung 20 steuerbar ist. Es ist allerdings nicht zwingend erforderlich, dass die Drehhalterung 20 mit einer Antriebseinrichtung 23 ausgestattet ist. Es kann alternativ eine manuelle Drehung der Messküvette 10 vorgesehen sein.

Gemäß eine bevorzugten Ausführung der Erfindung bilden die Träger 21, 22 und die Antriebseinrichtung 23 einen selbstspannenden Antrieb. Das Reibrad 23 drückt bei Betrieb die Küvette gegen den in Drehrichtung benachbarten Träger. Hierzu ist einer der Träger 21, 22 relativ zum Reibrad 23 unter einem Winkel von z. B. 90° angeordnet.

Ein erfindungsgemäßes Messgerät enthält zusätzlich zu den gezeigten Komponenten 10 und 20 ein Spektrometer 30. Das Spektrometer 30 ist in Fig. 1 schematisch mit der Beleuchtungsoptik 32 und einem Detektor 33 zur Transmissionsmessung illustriert. Die Beleuchtung erfolgt mit monochromatischem oder polychromatischem (insbesondere weißem) Licht. Je nach der Art der spektroskopischen Messung können alternativ andere Spektrometergeometrien vorgesehen sein. Das Spektrometer 30 kann beispielsweise eine integrierende Kugel (Ulbricht'sche Kugel) für Reflektionsmessungen umfassen. Des Weiteren kann ein Monochromator auf der Detektorseite der Probe vorgesehen sein. Das Messgerät ist mit einem (nicht dargestellten) Gehäuse ausgestattet, mit dem Umgebungslicht abgeschirmt wird.

Eine erfindungsgemäße Messküvette 10 ist vorteilhafterweise mit einer Kopplungseinrichtung ausgestattet, die mit der Antriebseinrichtung der Drehhalterung zusammenwirkt. Je nach dem Antriebsprinzip ist die Kopplungseinrichtung bspw. eine Kopplungsfläche, wie z. B. eine gezahnte Fläche oder eine Reibfläche, oder eine Nut zur Aufnahme eines Riementriebs. Des Weiteren können mechanische Komponenten, wie z. B. Hebel oder dgl. am Rand der Messküvette vorgesehen sein.

Eine abgewandelte Bauform eines erfindungsgemäßen Messgeräts ist ausschnittsweise in Fig. 2 illustriert. Bei dieser Ausführungsform ist die Messküvette 10 mit einer horizontalen Drehachse angeordnet. Von der Drehhalterung 20 ist lediglich die als Reibrad 23 gebildete Antriebseinrichtung illustriert. Das Spektrometer 30 umfasst eine Lichtquelle 31 (z. B. Weißlichtquelle mit Monochromator oder durchstimmbare Laser-Lichtquelle), eine Beleuchtungsoptik 32, einen Detektor 33 und eine Auswertungseinrichtung 34. Die Messstrecke von der Beleuchtungsoptik 32 zum Detektor 33 ist wie die Drehachse der Messküvette 10 horizontal ausgerichtet. Das Spektrometer 30 kann weitere optische Komponenten enthalten, die an sich von herkömmlichen Spektrometern bekannt sind, wie z. B. ein Filterrad oder Interferenzfilter. Die parallele Ausrichtung der optischen Messstrecke und der Drehachse ist kein zwingendes Merkmal der Erfindung, wird aber erfindungsgemäß für eine vereinfachte Justierung bevorzugt.

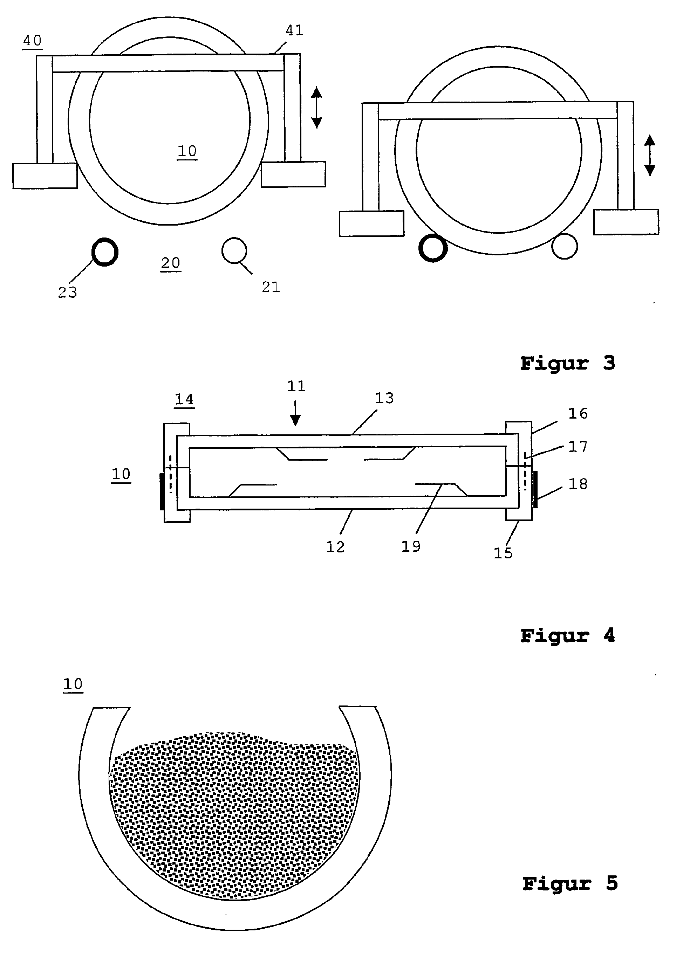

Ein erfindungsgemäßes Messverfahren zur spektroskopischen Analyse von Getreide besitzt z. B. den folgenden Ablauf. Zunächst wird die Probe 3 (bestehend aus einer Vielzahl von Partikeln, z. B. aus Getreidekörnern) in die Messküvette eingefüllt. Dies erfolgt je nach Bauform durch eine hierzu vorgesehene Öffnung oder durch Zusammensetzung eines Schalenaufbaus (siehe Figuren 4, 5). Die Probe 3 füllt vorzugsweise über 50% des Küvettenvolumens, nicht jedoch das Gesamtvolumen. Der Füllstand wird je nach Messgut gewählt und bspw. so eingestellt, dass in Messposition ungefähr 30 % des Fensters 11 freibleiben. Dadurch wird die Beweglichkeit der Probe in der Messküvette sichergestellt und eine Kalibrierungsmessung ermöglicht.

Nach der Befüllung wird die Messküvette 10 in die Drehhalterung eingesetzt. Je nach Messaufgabe erfolgt ggf. zuerst eine Kalibrierung. Hierzu wird die Messküvette 10 so in die optische Messstrecke gestellt, dass Messlicht durch die Messküvette ohne Wechselwirkung mit der Probe 3 zum Detektor 33 gelangt. Nach der Kalibrierung wird die Messküvette 10 in eine erste Messposition gestellt. In der Messposition befindet sind die Probe 3 in der optischen Messstrecke. Es erfolgt die spektroskopische Messung an der Probe 3. Die Umsetzung der Erfindung ist nicht auf bestimmte spektroskopische Messverfahren zur Erfassung der Wechselwirkung sichtbaren oder infraroten Lichtes mit der Probe beschränkt. Es können insbesondere Reflektions-, Transmissions- oder Fluoreszenzmessungen oder davon abgeleitete Messverfahren (z. B. zeitaufgelöste Verfahren, nicht lineare Verfahren) vorgesehen sein.

Es erfolgt bspw. eine Transmissionsmessung. Zur quantitativen Analyse von Getreide (sog. Chemometrie) erfolgt bspw. eine Probenbeleuchtung mit einer Wellenlänge im Bereich von 740 nm bis 1100 nm. Bei einer Probenschichtdicke in der Messküvette 10 ergibt sich eine optische Dichte von rd. 4. Die Transmissionsmessung umfasst ein an sich bekanntes Durchfahren des interessierenden Wellenlängenbereiches und eine Erfassung des jeweils von der Probe durchgelassenen Lichtes. Je nach Messaufgabe können andere Wellenlängenbereiche, insbesondere auch im sichtbaren Bereich, eingestellt werden. Entsprechendes gilt für Reflektionsmessungen, bei denen die Messwellenlänge oder der Wellenlängenbereich insbesondere in Abhängigkeit von der untersuchten Probe ausgewählt wird.

Nach einer ersten Messung in der ersten Messposition wird die Messküvette 10 gedreht. Die Drehung erfolgt um die Drehachse 1 um einen bestimmten Drehwinkel. Der Drehwinkel wird je nach Beweglichkeit der Probe und mechanischem Aufbau gewählt. Bei Getreide erfolgt bspw. eine Verdrehung um 30°. In der neuen Messposition erfolgt eine weitere Transmissionsmessung. Vorzugsweise erfolgt die spektroskopische Messung allgemein an der ruhenden Messküvette 10. Es sind jedoch grundsätzlich auch Messaufgaben lösbar, bei denen die Messküvette 10 während der Messung laufend gedreht wird. Nach Aufnahme der Transmissionsspektren oder einzelner Transmissionswerte in den verschiedenen Messpositionen erfolgt eine statistische Auswertung nach an sich bekannten Verfahren.

Messungen an Getreide haben ergeben, dass Transmissionsmessungen an 16 Messpositionen, d. h. nach 16 Drehungen, hervorragende Ergebnisse liefert. Bei 50 Messungen ergibt sich eine Standardabweichung von weniger als 0.02, was um einen Faktor 4 besser als die Ergebnisse mit herkömmlichen Getreide-Analysatoren ist.

Alternativ kann die Probe 3 die Partikel in einem flüssigkeitssuspendierten Zustand oder eine Flüssigkeit (flüssige Lösung od. dgl.) umfassen. Bei jeder Drehung ergibt sich ein Umwälzen der Partikelanordnung (oder Flüssigkeit) und/oder eine Neuverteilung ggf. zwischenzeitlich sedimentierter Partikel. Suspensionsproben umfassen zum Beispiel suspendierte Pigmentpartikel, Emulsionen mit Partikelzusätzen (z. B. Milch, Öle mit Feststoffen u. dgl.. Die Viskosität und Schichtdicke sind je nach Messaufgabe wählbar, die Probe kann auch als gering bewegliche Suspension oder Paste vorliegen.

Zur Manipulation der Messküvette 10 wird vorzugsweise eine Stelleinheit 40 verwendet, die schematisch in Fig. 3 illustriert ist. Die Stelleinheit 40 umfasst einen beweglichen Halterahmen 41. Mit diesem ist die Messküvette 10 von einer Ladeposition (linker Teil von Fig. 3) in eine Mess- oder Kalibrierposition (rechter Teil von Fig. 3) verfahrbar. In der Ladeposition ist die Messküvette 10 von der Drehhalterung abgehoben. Die Messküvette 10 kann einfach manuell in den Halterahmen 41 eingesetzt oder aus diesem entnommen werden. Durch vertikales Absenken des Halterahmens 41 auf die Drehhalterung, von der lediglich ein Träger 21 und ein Reibrad 23 illustriert sind, wird die Messküvette 10 in den Betriebszustand versetzt. Der mechanische Antrieb (nicht dargestellt) mit dem der Halterahmen 41 betätigt wird, kann gleichzeitig auch zum Verfahren der Drehhalterung in vertikaler Richtung zum Wechsel zwischen Kalibrier- und Messpositionen verwendet werden.

Die Figuren 4 und 5 zeigen zwei Ausführungsformen von dosenförmigen Messküvetten 10, mit denen die Erfindung umgesetzt wird. Gemäß Figur 4 umfasst eine Messküvette 10 eine untere und eine obere Schale 12, 13, die jeweils einen ebenen Boden (Bildung der Küvettenfenster) und einen umlaufenden Rand besitzen und mit den Rändern aneinanderliegend durch einen Ringrahmen 14 zusammengehalten werden. Die Ränder sind zur Messung an flüssigen Proben mit Dichtungen ausgestattet. Der Ringrahmen 14 besteht aus einem unteren und einem oberen Ring 15, 16. Die Ringe 15, 16 können durch Haltestifte 17 zueinander ausgerichtet und mit Permanentmagneten, die in die Ringe integriert sind, zusammengehalten werden. Das Bezugszeichen 18 verweist auf eine Reibfläche, die umlaufend auf der Außenseite des unteren Ringes 15 angebracht ist.

Im Inneren der Schalen 12, 13 sind Mischelemente 19 vorgesehen. Die Mischelemente 19 umfassen bspw. Hebel, Haken, Treppen oder dgl.. Sie sind so angeordnet, dass sie in der Messposition den optischen Strahlengang nicht behindern. Die Mischelemente 19 besitzen besondere Vorteile bei der Vermischung von suspendierten Partikeln oder Lösungen.

Die Schalen 12, 13 bilden die Fenster der Messküvette 10. Allgemein sind die Fenster ebene, transparente Seitenwände. Sie bestehen bspw. aus Glas (z. B. aus BK270-Glas mit einer Dicke von 1 mm) oder einem Kunststoff mit geeigneten optischen Eigenschaften. Die Messküvette 10 wird auf der Drehhalterung 20 vorzugsweise so ausgerichtet, dass die Drehachse 1 (siehe Fig. 1) senkrecht auf der Ebene der Fenster (oder Schalenböden) steht.

Beim dargestellten Beispiel besitzt die Messküvette 10 bspw. einen Durchmesser von rd. 10 cm. Im Küvetteninnern wird eine Schichtdicke eingestellt, die insbesondere in Abhängigkeit vom Messobjekt gewählt wird. Sie beträgt bspw. rd. 5 mm für Messungen an Raps, rd. 8 mm bis 18 mm für Messungen an Getreide und rd. 30 mm für Messungen an Mais. Hierbei handelt es sich jedoch lediglich um Beispielangaben. Es sind auch geringere Schichtdicken, z. B. zur Messung an Gewürzen oder Suspensionen, oder größere Schichtdicken möglich.

Der Aufbau der Messküvette aus Teilschalen besitzt den Vorteil einer schnellen Beschickung, einfachen Reinigung und eines flexiblen Anpassens der Messschichtdicke an die jeweilige Probe. Die beiden Schalen 12, 13 besitzen vorzugsweise verschiedene Volumen. Die Probe wird in die größere Schale eingefüllt. Der Füllstand in der verkippten Messküvette entspricht dann dem Volumenverhältnis der beiden Schalen, das bspw. 1/3:2/3 beträgt.

Die Messküvette 10 kann alternativ gemäß Fig. 5 einseitig geöffnet sein. Bei diesem Aufbau erfolgt mit der Drehhalterung eine Schwenkbewegung mit gelegentlicher, z. B. abwechselnder Umkehr der Drehrichtung. Mit der Küvettenöffnung wird die Probenbeschickung vereinfacht.

Die in der vorstehenden Beschreibung, den Zeichnungen und den Ansprüchen offenbarten Merkmale der Erfindung können sowohl einzeln als auch in verschiedenen Kombinationen für die Verwirklichung der Erfindung in ihren Ausgestaltungen von Bedetung sein.

## Patentansprüche

1. Messanordnung, insbesondere für spektroskopische Messungen an einer partikelförmigen Probe, wobei die Messanordnung umfasst:
- eine Messküvette (10) zur Probenaufnahme, die mindestens ein Fenster (11) aufweist, durch das die Probe (3) bestrahlbar ist, und
- eine Drehhalterung (20), mit der die Messküvette (10) um eine vorbestimmte Drehachse (1) drehbar ist, wobei die Ausrichtung der Drehachse (1) von einer vertikalen Bezugsrichtung abweicht,
**dadurch gekennzeichnet, dass**
die Messküvette (10) zwei Schalen (12, 13) umfasst, die im zusammengesetzten Zustand einen Behälter für die Probe bilden.

2. Messanordnung gemäß Anspruch 1, bei der die Drehachse (1) horizontal ausgerichtet ist.

3. Messanordnung gemäß Anspruch 1 oder 2, bei der die Messküvette (10) eine Kopplungseinrichtung aufweist, die mit einer Antriebseinrichtung der Drehhalterung (20) zusammenwirkt.

4. Messanordnung gemäß Anspruch 3, bei der die Kopplungseinrichtung eine Kopplungsfläche (18) oder eine Nut für einen Riemenantrieb umfasst.

5. Messanordnung gemäß einem der vorhergehenden Ansprüche, bei der die zwei Schalen (12, 13) durch einen Ringrahmen (14) zusammengehalten werden.

6. Messanordnung gemäß Anspruch 5, bei der die beiden Schalen (12, 13) verschiedene Volumen besitzen.

7. Messanordnung gemäß einem der vorhergehenden Ansprüche, bei der die Messküvette (10) mechanische Mischelemente (19) enthält.

8. Messanordnung gemäß einem der vorhergehenden Ansprüche, bei der die Messküvette (10) eine Öffnung zur Probenbeschickung und -entnahme aufweist.

9. Messgerät, insbesondere für spektroskopische Messungen an partikelförmigen Proben, die eine Messanordnung gemäß einem der vorhergehenden Ansprüche und ein Spektrometer (30) umfasst.

10. Messgerät gemäß Anspruch 9, das eine Stelleinheit (40) aufweist, mit der Messküvette (10) von einer Ladeposition in eine Kalibrier- oder Messposition verfahrbar ist.

11. Verfahren zu spektroskopischen Messung an einer partikelförmigen oder flüssigen Probe, die in einer Messküvette (10) der Messanordnung gemäß einem der Ansprüche 1 bis 8 angeordnet wird, wobei mindestens zwei spektroskopische Messungen durchgeführt werden und zwischen den Messungen jeweils die Messküvette (10) um die Drehachse (1) verdreht wird, die von der vertikalen Bezugsrichtung abweicht.

12. Verfahren gemäß Anspruch 11, bei der die Messküvette (10) zwischen jeweils zwei Messungen um eine horizontale Drehachse (1) gedreht wird.

13. Verwendung einer Messanordnung, eines Messgeräts oder eines Verfahrens gemäß einem der vorhergehenden Ansprüche zur spektroskopischen Analyse von partikelförmigen, frei geschütteten oder suspendierten oder von flüssigen Proben, insbesondere von landwirtschaftlichen Produkten, wie z. B. Getreide, oder Suspensionen.

## Claims

1. A measuring arrangement, in particular for spectroscopic measurements on a particulate sample, comprising:
- a measuring cuvette (10) for accommodating the sample, having at least one window (11) through which the sample (3) can be exposed to radiation, and
- a rotating mount (20) with which the measuring cuvette (10) can be rotated about a predetermined axis of rotation (1), wherein the alignment of the axis of rotation (1) deviates from a vertical reference direction,
**characterized in that** the measuring cuvette (10) comprises two shells (12, 13), which in a composed state form a container for the sample.

2. The measuring arrangement according to Claim 1, wherein the axis of rotation (1) is aligned horizontally.

3. The measuring arrangement according to Claim 1 or 2, wherein the measuring cuvette (10) has a coupling device which cooperates with a driving device of the rotating mount (20).

4. The measuring arrangement according to Claim 3, wherein the coupling device has a coupling surface (18) or a groove for a belt drive.

5. The measuring arrangement according to one of the preceding claims, wherein the two shells (12, 13) are held together by a ring frame (14).

6. The measuring arrangement according to Claim 5, wherein the two shells (12, 13) have different volumes.

7. The measuring arrangement according to one of the preceding claims, wherein the measuring cuvette (10) contains mechanical mixing elements (19).

8. The measuring arrangement according to one of the preceding claims, wherein the measuring cuvette (10) has an opening for sample charging and removal.

9. A measuring device, in particular for spectroscopic measurements on particulate samples, comprising a measuring arrangement according to one of the preceding claims and a spectrometer (30).

10. The measuring device according to Claim 9 having an actuator unit (40) with which the measuring cuvette (10) can be moved from a loading position into a calibration position or measurement position.

11. A method for spectroscopic measurement on a particulate or liquid sample arranged in a measuring cuvette (10), according to one of the claims 1 to 8, whereby at least two spectroscopic measurements are performed, and between the measurements, the measuring cuvette (10) is rotated about an axis of rotation (1) which deviates from a vertical reference direction.

12. The method according to Claim 11, wherein the measuring cuvette (10) is rotated about a horizontal axis of rotation (1) between two measurements.

13. A use of a measuring arrangement, a measuring device or a method according to one of the preceding claims for spectroscopic analysis of particulate, free-flowing or suspended or liquid samples, in particular agricultural products such as cereal grain or suspensions.

## Revendications

1. Dispositif de mesure, en particulier pour des mesures spectroscopiques sur un échantillon sous forme de particules, le dispositif de mesure comprenant :
- une cuve de mesure (10) pour le logement d'échantillon, qui présente au moins une fenêtre (11), par laquelle l'échantillon (3) peut être irradié, et
- un support tournant (20) avec lequel la cuve de mesure (10) peut être tournée autour d'un axe de rotation (1) prédéfini, l'orientation de l'axe de rotation (1) s'écartant d'un sens de référence vertical,
**caractérisé en ce que**
la cuve de mesure (10) comporte deux coupes (12, 13), qui forment un récipient pour l'échantillon lorsqu'elles sont assemblées.

2. Dispositif de mesure selon la revendication 1, dans lequel l'axe de rotation (1) est orienté horizontalement.

3. Dispositif de mesure selon la revendication 1 ou 2, dans lequel la cuve de mesure (10) présente un dispositif de couplage qui coopère avec un système d'entraînement du support tournant (20).

4. Dispositif de mesure selon la revendication 3, dans lequel le dispositif de couplage comporte une surface de couplage (18) ou une rainure pour une commande pour un entraînement par courroie.

5. Dispositif de mesure selon l'une quelconque des revendications précédentes, dans lequel les deux coupes (12, 13) sont maintenues ensemble par un cadre annulaire (14).

6. Dispositif de mesure selon la revendication 5, dans lequel les deux coupes (12, 13) présentent différents volumes.

7. Dispositif de mesure selon l'une quelconque des revendications précédentes, dans lequel la cuve de mesure (10) présente des éléments de mélange (19) mécaniques.

8. Dispositif de mesure selon l'une quelconque des revendications précédentes, dans lequel la cuve de mesure (10) présente une ouverture pour l'alimentation en échantillon et le prélèvement d'échantillon.

9. Appareil de mesure, en particulier pour des mesures spectroscopiques sur des échantillons sous forme de particules, qui comporte un dispositif de mesure selon l'une quelconque des revendications précédentes et un spectromètre (30).

10. Appareil de mesure selon la revendication 9, qui présente une unité de réglage (40), capable à déplacer la cuve de mesure (10) d'une position de chargement dans une position d'étalonnage ou une position de mesure.

11. Procédé de mesure spectroscopique sur un échantillon sous forme de particules ou liquide, qui est disposée dans une cuve de mesure (10) du dispositif de mesure selon l'une quelconque des revendications 1 à 8, au moins deux mesures spectroscopiques étant effectuées et la cuve de mesure (10) étant tournée à chaque fois entre les mesures autour de l'axe de rotation (1) qui diffère du sens de référence vertical.

12. Procédé selon la revendication 11, dans lequel la cuve de mesure (10) est tournée entre respectivement deux mesures autour d'un axe de rotation (1) horizontal.

13. Utilisation d'un dispositif de mesure, d'un appareil de mesure ou d'un procédé selon l'une quelconque des revendications précédentes pour l'analyse spectroscopique d'échantillons sous forme de particules, versées librement ou en suspension ou d'échantillons liquides, en particulier de produits agricoles, comme, par exemple, des céréales ou des suspensions.
